# EUROPEAN PATENT APPLICATION

(11) **EP 3 694 232 A1**
(43) Date of publication of application: **12.08.2020**
(21) Application number: 20165277.3
(22) Date of filing: 21.05.2015
(51) Int. Cl.: H04W 4/00, H04W 48/10, H04W 4/80, H04W 48/16

(54) **METHOD AND APPARATUS FOR INITIATING A HIGH-POWER CONNECTION VIA A LOW-POWER INTERFACE**

(30) Priority: 30.05.2014 US 201462005939 P
(62) Divisional of application: 15168743.1
(71) Applicant: Apple Inc., Cupertino CA 95014 (US)
(72) Inventor: LIU, Yong, Cupertino, CA California 95014 (US); HARTMAN, Christian, Cupertino, CA California 95014 (US); BORGES, Daniel, Cupertino, CA California 95014 (US); HARIHARAN, Sriram, Cupertino, CA California 95014 (US); WONG, Chiu, Cupertino, CA California 95014 (US); YONG, Su, Cupertino, CA California 95014 (US)
(74) Representative: Rooney, John-Paul

(57) **Abstract**

A device capable of forming a network connection with a remote device, the device comprising, a processor; a memory; a low-power network interface; a controller associated with the low-power interface; wherein, while the processor is suspended, the controller is configured to: perform a scan of a channel for the remote device; receive, during the scan of the channel, a communication from the remote device; responsive to receiving the communication, determine whether to establish a network connection with the remote device via the low-power network interface; and in response to determining the network connection is to be established with the remote device via the low-power network interface, utilize a protocol layer that resides within the low-power network interface to establish the network connection with the remote device, wherein the low-power network interface is a Bluetooth low energy (BTLE) interface.

## Description

### BACKGROUND

Apparatus and methods are provided for efficiently conducting device and service discovery over a wireless network interface.

Contemporary mobile devices often possess Wi-Fi radio interfaces, which allow these devices to participate in infrastructure networks and communicate directly with other devices in a peer-to-peer (P2P) network. The ability to form network connections without a physical connection provides a great advantage to mobile devices because such devices tend to move from one location to the next, forming intermittent connections with other devices that happen to be within range.

However, mobile devices often depend on batteries for power. Therefore, it is disadvantageous for a mobile device to leave its Wi-Fi radio interface in an active state when there are no other devices to connect to. A device may attempt to conserve power by placing its Wi-Fi radio interface into a sleep state when not in use. Yet, even while suspended, a Wi-Fi radio interface continues to siphon energy from the device's battery. Furthermore, while its Wi-Fi radio interface is asleep, the device may miss opportunities to discover and connect to other devices that come into range.

Thus, a method for conserving a mobile device's battery power while still allowing the device to discover and connect to other devices via a Wi-Fi connection is needed.

### SUMMARY

An apparatus and methods are provided for initiating a network connection between a first device and a second device. In these methods, while one or more high-power network interfaces of the first device are in a dormant state, the first device communicates with a second device via the first device's low-power network interface. The first device then determines, based on the communication, whether to establish a network connection with the second device via a high-power network interface of the first device. Finally, if the first device is to establish the network connection with the second device via the high-power network interface, the device then wakes the first high-power network interface and connects to the second device via the first high-power network interface.

It should be noted that the process of communicating via low-power network interfaces may be contained within the low-power network interface's controller, thereby avoiding any need for any assistance from a host processor. Thus, the process of communicating via low-power network interfaces may take place while the processors of both devices are in a suspended state. It should also be noted that the two devices may exchange connection parameters for establishing a connection over a high-power network interface while communicating over a low-power network interface, thereby facilitating or shortening future device/service discovery via a high-power network interface when it comes time to form the connection over the high-power network interface.

In some embodiments, when communicating with the second device via the low-power network interface, the first device may receive a service advertisement that is broadcast by the second device and that discloses one or more services provided by a high-power network interface of the second device. If the first device is interested in a service disclosed in the service advertisement, the first device may send a request to the second device.

In some embodiments, a subsequent service advertisement discloses one or more services provided by a second high-power network interface of the second device.

### DESCRIPTION OF THE FIGURES

FIG. 1A illustrates a communication environment in accordance with an embodiment.
FIG. 1B illustrates a communication environment in accordance with an embodiment.
FIG. 1C illustrates a communication environment in accordance with an embodiment.
FIG. ID illustrates a communication environment in accordance with an embodiment.
FIG. 2 illustrates a Bluetooth low energy (BTLE) stack in accordance with an embodiment.
FIG. 3 presents a flowchart illustrating a process of exchanging information over the BTLE protocol to initiate a Wi-Fi connection.
FIG. 4 presents an event diagram illustrating a process of exchanging information over the BTLE protocol to initiate a Wi-Fi connection.
FIG. 5A illustrates a sequence of advertising events.
FIG. 5B illustrates an advertising event and a connection event.
FIG. 6 illustrates the internal structure of BTLE advertising packets, scan request packets, and scan response packets.
FIG. 7 presents a flowchart illustrating a process of using unmodified BTLE frames to exchange service/interface information with a single-round handshake.
FIG. 8 illustrates a sequence of unmodified BTLE frames within an advertising event.
FIG. 9 presents an event diagram illustrating a process of using unmodified BTLE frames to exchange service/interface information with a single round handshake.
FIG. 10 presents a flowchart illustrating a process of using unmodified BTLE frames to exchange service/interface information with a two-round handshake.
FIG. 11 illustrates a sequence of unmodified BTLE frames in a two-round handshake.
FIG. 12 presents a flowchart illustrating a process of using extended scan request frames to exchange service/interface information.
FIG. 13 illustrates a sequence of extended scan request frames within an advertising event.
FIG. 14 presents an event diagram illustrating a process of using extended scan request frames to exchange service/interface information.
FIG. 15 presents a flowchart illustrating a process of using a connection event to exchange service/interface information.
FIG. 16 illustrates BTLE frames within an advertising event and a connection event.
FIG. 17 presents an event diagram illustrating a process of using a connection event to exchange service/interface information.

### DETAILED DESCRIPTION

The following description is provided in the context of a particular application and its requirements. Various modifications to the disclosed embodiments will be readily apparent to those skilled in the art, and the general principles defined herein may be applied to other embodiments and applications.

In some embodiments, an apparatus and methods are provided for efficiently conducting via a low-power wireless technology a mobile device's discovery of services that require a high-power connection. Here, the device may possess a plurality of wireless network interfaces such as a Wi-Fi radio interface and a Bluetooth low energy® (BTLE) radio interface. The device, being limited to battery power, may manage its wireless network interfaces accordingly to minimize power usage. Networks formed using the Wi-Fi radio interface, which include Neighbor Awareness Networking (NAN) networks and Wi-Fi Direct® (WFD) networks, are suitable for transferring large amounts of data between devices. In contrast, connections over the BTLE protocol, which provides a lower rate of data transfer than Wi-Fi, use far less power. Some embodiments seek to leverage both BTLE's small energy footprint and Wi-Fi's generous transfer rates by using BTLE radio interfaces to discover and initialize connections to Wi-Fi-based services.

Mobile devices frequently change locations, thereby causing network connections formed under NAN or WFD to be ephemeral. In scenarios where no devices are in range, a mobile device may suspend its Wi-Fi radio to conserve power. Even when a Wi-Fi radio interface is in a sleep state, however, the interface will continue to draw 150 µA. In comparison, a BTLE radio interface draws only 2-4 µA while in a sleep state. To conserve power, some embodiments may have a mobile device switch off its Wi-Fi radio interface. To ensure that the device is still able to discover and connect to Wi-Fi services provided by other devices that come into range, some embodiments may utilize the device's BTLE radio interface to scan for the services.

### Introduction

A P2P wireless communication environment may be characterized by any number of devices of the same type and/or different types - such as smartphones, tablets, personal digital assistants, laptop and desktop computers and so on. Different devices will have different features, may execute different applications, may have different power levels (e.g., battery strengths), different communication needs, different loads (e.g., on a processor, on an antenna), may be heard by other devices with varying signal strengths, etc. In addition, the communication environment may be fluid, with devices continuously entering, moving through and exiting the spatial region encompassing the environment.

Some embodiments disclosed herein enable devices in such an environment to discover each other and to communicate directly, peer-to-peer. These embodiments: promote low power consumption even while making devices and services readily discoverable; coexist with other communication technologies (e.g., Bluetooth®); support multi-band operation (e.g., 2.4 GHz and 5 GHz); avoid the throughput and latency degradation usually encountered with network infrastructure (e.g., access points) while maintaining compatibility with infrastructure-based technologies; easily and quickly recover if and when a device acting as a master (or having some other supervisory role) exits the environment; and are scalable to accommodate dense environments having many devices. These and other features and advantages are described below.

### Communication Environment

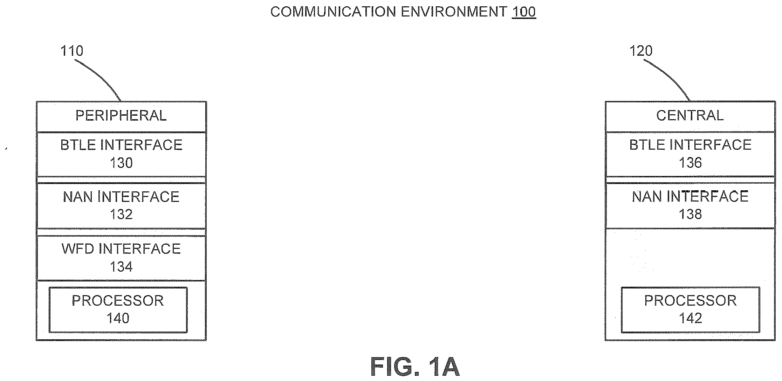

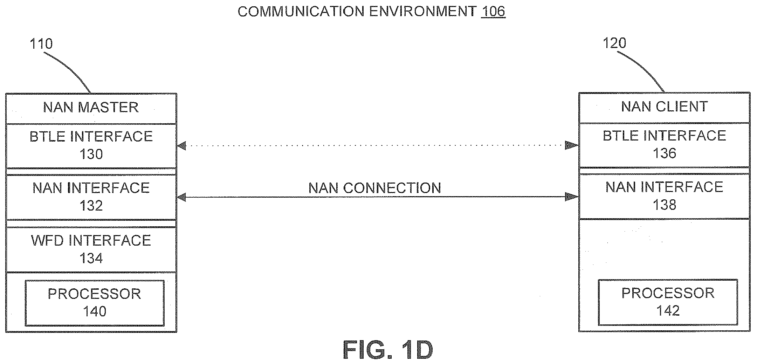

FIGs. 1A-D illustrate communication environments in accordance with an embodiment. Communication environments 100-106 include a number of computer systems, which can include any type of computer system based on a microprocessor, a digital signal processor, a portable computing device, a personal organizer, a device controller, or a computational engine within an appliance. More specifically, communication environments 100-106 illustrate a communication environment at different stages of a process in which peripheral device 110 communicates with central device 120 via BTLE to initialize a Wi-Fi connection. Once the Wi-Fi connection is formed, peripheral device 110 and central device 120 become members of a newly formed NAN network.

Here, peripheral device 110 and central device 120 may be wireless devices that include computational capability, such as PDAs, tablet computers, laptops, desktops, smartphones, and cell phones. Peripheral device 110 may also be an electronic peripheral such as a headset, a speaker, a GPS receiver, a mouse, a keyboard, a watch, an automotive component, a healthcare device, a security device, or a home automation device. Here, peripheral device 110 contains host processor 140 and central device 120 contains host processor 142

It should be noted that peripheral device 110 is referred to as a peripheral device because such devices generally act as accessory/peripheral devices that are paired to or associated with a central/master device, such as central device 120. Peripheral devices generally broadcast advertisements to other devices in range, while central devices generally search for peripheral devices by actively scanning for advertisement broadcasts. It should also be noted that in some scenarios peripheral device 110 and central device 120 may both be central/master devices that have the capability of pairing with each other.

Peripheral devices and central devices both include a low-power network interface such as a BTLE radio interface and at least one high-power network interface such as a Wi-Fi radio interface. Additionally, Wi-Fi radio interfaces may implement virtual network interfaces such as NAN interfaces and WFD interfaces. More specifically, peripheral device 110 possesses BTLE interface 130 and a Wi-Fi radio interface that implements NAN interface 132 and WFD interface 134, while central device 120 possesses BTLE interface 136 and a Wi-Fi radio interface that implements NAN interface 138.

It should be noted that low-power network interfaces are not limited to BTLE interfaces and may refer to other personal area network and low-power network technologies such as legacy Bluetooth, low power Long Term Evolution (LTE), Zigbee®, Z-Wave®, and NFC. Likewise, high-power network interfaces are not limited to Wi-Fi radio interfaces and may refer to other network technologies such as cellular network technologies, Ethernet and other wired networking technologies, Wireless Gigabit Alliance (WiGIG) technologies, and Worldwide Interoperability for Microwave Access (WiMAX). In fact, a high-power network interface may also refer to relatively low-powered network technologies such as legacy Bluetooth or low power LTE as well. Finally, virtual network interfaces implemented by a high-power network interface may include NAN interfaces, WFD interfaces, Independent Basic Service Set (IBSS) interfaces, and any virtual network interface/device/adapter or software-based networking technology that executes on top of a physical network interface.

It should also be noted that peripheral device 110 and central device 120 are physically close enough to each other to enable BTLE communications between the two devices.

In addition, different embodiments may feature operating environments and devices having configurations other than those depicted in FIGs. 1A-D.

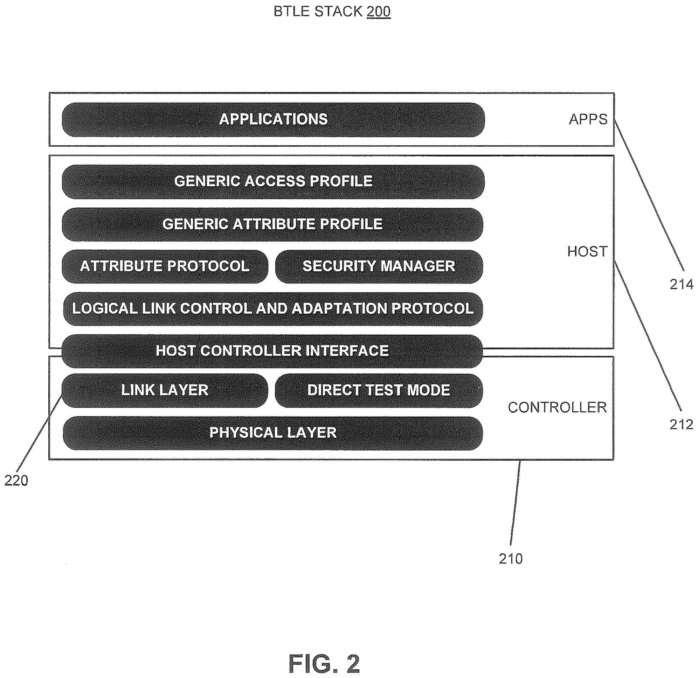

FIG. 2 illustrates a BTLE stack 200 in accordance with an embodiment. Here, BTLE stack 200 may be implemented within the software or firmware of a BTLE radio interface. BTLE stack 200 represents a hierarchical model of network or communications functions provided by the BTLE protocol. Each protocol layer depends on services provided by protocol layers below it and provides services for protocol layers above it. Protocol layers within BTLE stack 200 may be categorized in the following way: layers managed by the controller of a BTLE radio interface (referred to as controller layers 210), layers managed by the host device (referred to as host layers 212), and application layers (214). Link layer 220, which is a controller layer, handles the broadcast of advertising frames, active scanning, connection setup, transmitting acknowledgment frames, flow control, and link layer control. The host layers handle logical BTLE connections, while the application layers launch, control, and terminate end-user applications.

It should be noted that unlike other layers in BTLE stack 200, controller layers, being handled by the controller of a BTLE radio interface, may operate without the assistance of the host device's processor. Thus, once the host device's processor is suspended, the controller layers continue to function with much lower power consumption. For example, if central device 120 suspends processor 142 to save power, BTLE interface 136 cannot perform operations that involve layers other than controller layers without waking up processor 142. Here, central device 120 would need to rely on the protocol layers that reside within BTLE interface 136 to handle communications across BTLE.

In general, the creation of a BTLE connection between a peripheral device and a central device begins in the controller layers. First, the peripheral device begins broadcasting advertising frames, also known as ADV_IND frames, to advertise services that it may provide over a BTLE connection. It should be noted that BTLE has 40 2-MHz channels. Three of the 40 channels are reserved for device discovery. These channels, otherwise known as advertising channels, comprise channels 37, 38, and 39. The other 37 channels can be used for data communication between BTLE devices that have already formed BTLE connections.

As the peripheral device broadcasts its advertising frames across BTLE advertising channels, the central device may receive one of these advertising frames and decide it would like to connect to the peripheral device. The central device then transmits a connection request (CONNECT_REQ) frame across the same advertising channel on which it received the advertising frame. After establishing a BTLE connection at the link-layer level, the peripheral device and the central device may begin hopping among the BTLE data channels to avoid congesting BTLE advertising channels while exchanging data across their newly formed BTLE connection. Eventually, communications between the two devices enter the service discovery phase. Because service discovery requires the involvement of the host layers, either device would need to wake up their host processor if it had been asleep up to this point.

### Initializing a High-Power Network Connection via a Low-Power Interface

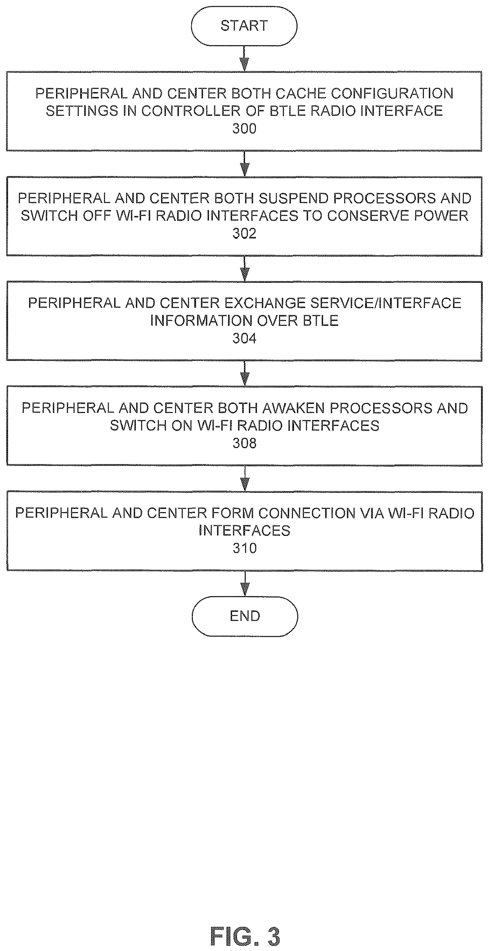

FIG. 3, in conjunction with FIGs. 1A-D, provides a high level overview of how a peripheral device and a central device communicate over the BTLE protocol to conserve power while initializing a Wi-Fi connection with each other. Using FIG. 1A as an example, peripheral device 110 and central device 120 are both initially unaware of the other's presence. At this point, all wireless interfaces of both devices are switched on and drawing power, although some of the wireless interfaces may be in a sleep state. Neither device has formed a Wi-Fi connection with the other device. Both devices decide to conserve power by switching off their Wi-Fi radio interfaces. To do so, each device offloads service discovery to the controller of their BTLE radio interface by storing service and virtual network interface information within the controller, thereby enabling the controller layers to communicate such information to other devices (1) without the assistance of the device's host processor and (2) with very low power consumption (operation 300). Information regarding a particular service (which a peripheral device would need to provide) or service request (which a central device would need to make) may include (1) a six-byte service ID/hash, (2) a full or partial service name, (3) detailed information about the service, and (4) an indication/identification of the virtual network interface(s) that provides or requests the service. Information regarding a particular virtual network interface may include (1) the interface's index, (2) the interface's type (such as NAN, WFD, or IBSS), (3) a full or partial MAC address of the virtual network interface, (4) a time duration lasting from the device's confirmation of Wi-Fi radio interface activation until the corresponding virtual network interface becomes available, (5) the virtual network interface's rendezvous channel, and (6) other interface-specific information such as the virtual network interface's state, transfer rate, or role.

Next, to conserve power, devices 110 and 120 suspend their processors and transition their Wi-Fi radio interfaces into a dormant state (operation 302). Transitioning a Wi-Fi radio interface into a dormant state may include turning/switching the interface off, placing the interface into a hibernation mode, placing the interface into a deep sleep mode, and placing the interface into any sort of state that would enable the host device to conserve power. From this point on, both devices 110 and 120 rely on BTLE interfaces 130 and 136 to discover devices and services. Devices 110 and 120 then begin exchanging service information and virtual network interface information over the BTLE protocol (operation 304). Peripheral device 110 begins periodically conducting advertising events to advertise its services and virtual network interfaces. In the meantime, central device 120 begins scanning BTLE advertising channels for advertising frames. Whenever central device 120 receives an advertising frame, it may check the frame to see whether peripheral device 110 (1) possesses a virtual network interface that central device 120 can utilize (which, in this case, is a NAN interface), and (2) whether that virtual network interface provides a service that central device 120 is interested in. In other words, central device 120 is searching for a peripheral device that offers a specific service/interface combination. It should also be noted that peripheral device 110 may offer a different set of services through each of its virtual network interfaces. In other words, each virtual network interface provides a "service set."

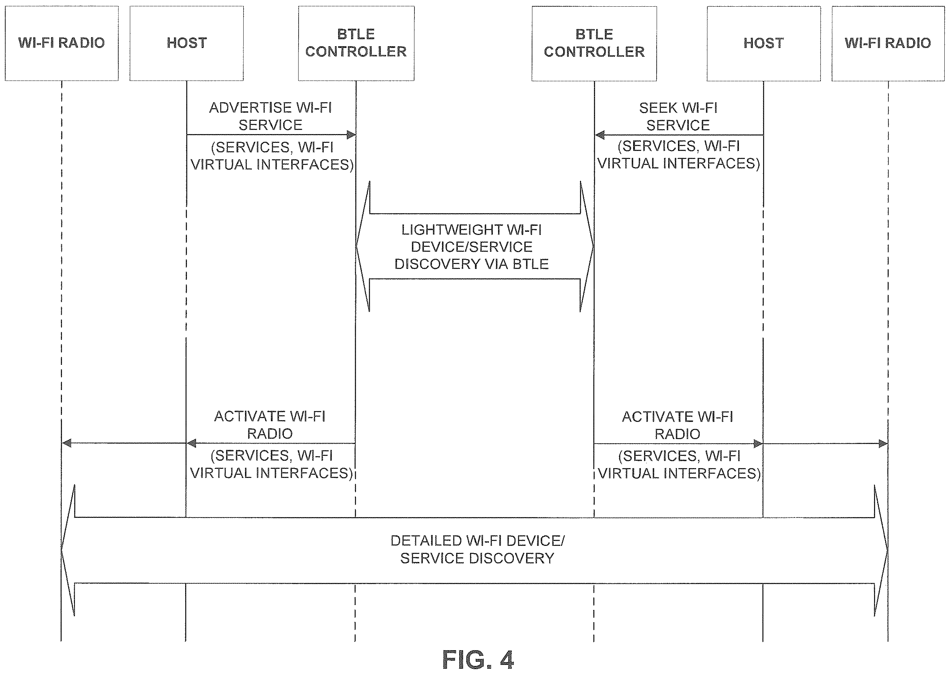

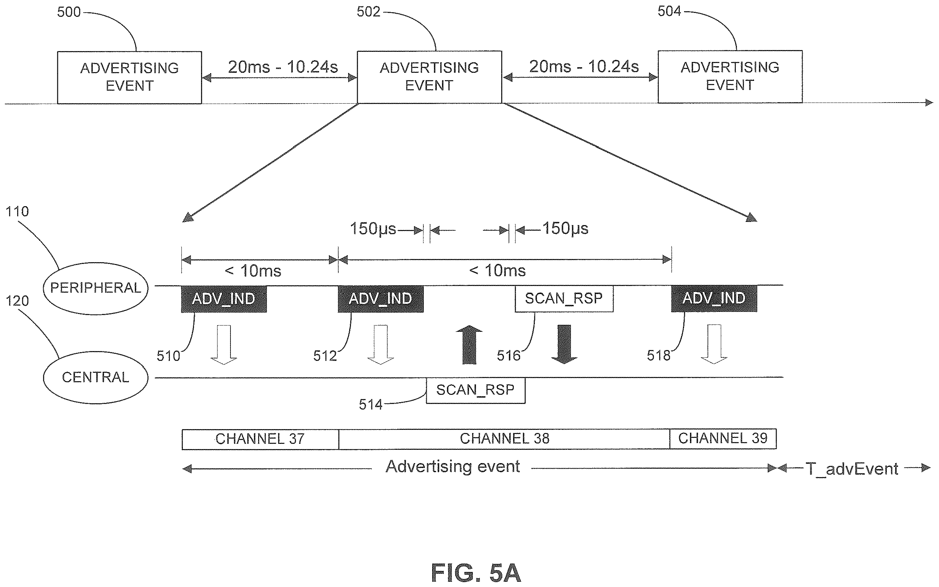

FIG. 4 presents an event diagram that illustrates the process of exchanging information over the BTLE protocol to initiate a Wi-Fi connection as described in the flowchart of FIG. 3. FIG. 5A illustrates a series of consecutive advertising events 500, 502, and 504 conducted by peripheral device 110. During an advertising event, peripheral device 110 transmits a single advertising frame across each BTLE advertising channel. If central device 120 receives an advertising frame, central device 120 may respond by transmitting its own BTLE frames. For example, in response to an advertising frame received from peripheral device 110, central device 120 may transmit a scan request frame (SCAN_REQ frame) to peripheral device 110.

As shown in FIG. 5A, peripheral device 110 first conducts advertising event 500. Here, peripheral device 110 switches BTLE interface 130 from a deep-sleep state to an active state to broadcast three consecutive advertising frames. If central device 120 is out of range or turned off, peripheral device 110 may not receive a response. Without the participation of central device 120, peripheral device 110 may simply broadcast an advertising frame once on channel 37, once on channel 38, and once on channel 39. The period during which a single advertising frame is broadcast is no more than 10ms. As a result, advertising event 500 may last no more than 30ms.

After advertising event 500, peripheral device 110 returns BTLE interface 130 to a deep-sleep state to conserve power, and waits between 20ms and 10.24s until the next scheduled advertising event. Once peripheral device 110 reaches advertising event 502, it reawakens BTLE interface 130, which is used to broadcast a second advertising frame. This time, central device 120 is in range. While scanning channel 38, if BTLE interface 136 detects an advertising frame that advertises a service/interface combination that central device 120 is interested in, it may respond with a scan request frame. BTLE interface 136 does not detect advertising frame 510 because it is sent on a different advertising channel (i.e., channel 37). However, BTLE interface 136 does pick up advertising frame 512, which is sent on channel 38. After central device 120 finds that advertising frame 512 contains a service that central device 120 is interested in, BTLE interface 136 transmits scan request frame 514 to peripheral device 110 in response to advertising frame 512 advertising a service of interest. In response to receiving scan request frame 514, BTLE interface 130 transmits a scan response (SCAN_RSP) frame that may contain detailed information regarding the currently advertised service set or service/interface combination. Incidentally, advertising frame 518, which is advertised on channel 39, goes undetected by central device 120. Additionally, between 20ms and 10.24s after advertising event 502 finishes, peripheral device 110 may conduct advertising event 504.

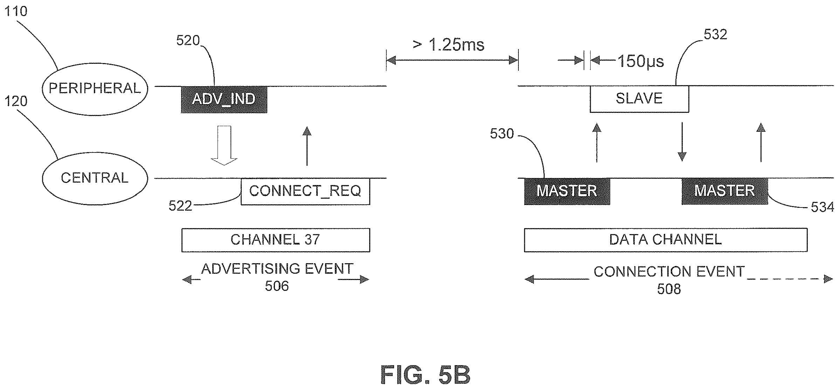

In some embodiments, rather than responding to an advertising frame with a scan request, a central device may attempt to form a BTLE connection with the peripheral device by sending it a connection request frame. If the connection succeeds, a connection event is initiated between the central device and the peripheral device. FIG. 5B depicts an illustrative scenario in which central device 120 responds to advertising frame 520 with connect request frame 522 on channel 37, wherein frame 520 was sent by peripheral device 110 on channel 37. Here, a period of 1.25ms passes after the end of advertising event 506 before a connection is formed between the two devices. During connection event 508, central device 120, which may now be referred to as the master device, and peripheral device 110, which may now be referred to as the slave device, exchange data frames 530-534.

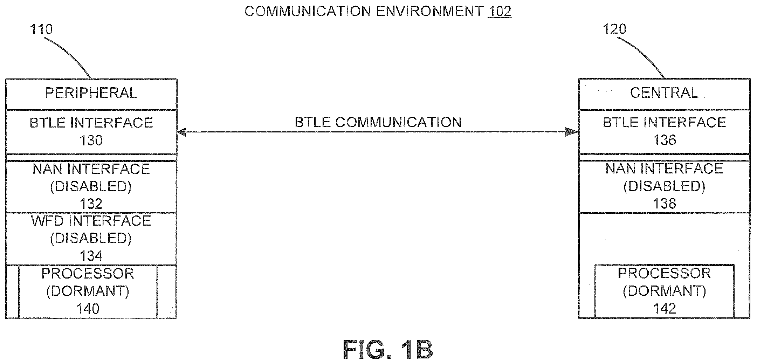

As illustrated in FIG. 1B, regardless of whether central device 120 responds with a scan request or a connect request, devices 110 and 120 proceed to exchange data over the BTLE protocol. During the exchange over the BTLE protocol, central device 120 desires the following information from peripheral device 110: (1) whether peripheral device 110 provides a service/interface combination that central device 120 desires, and (2) information that allows central device 120 to quickly connect to peripheral device 110 via Wi-Fi or some other high-power network interface. Examples of the latter type of information include NAN interface 132's interface type, network address, and preferred rendezvous channel. Likewise, peripheral device 110 may want to know NAN interface 138's interface type, network address, and preferred rendezvous channel.

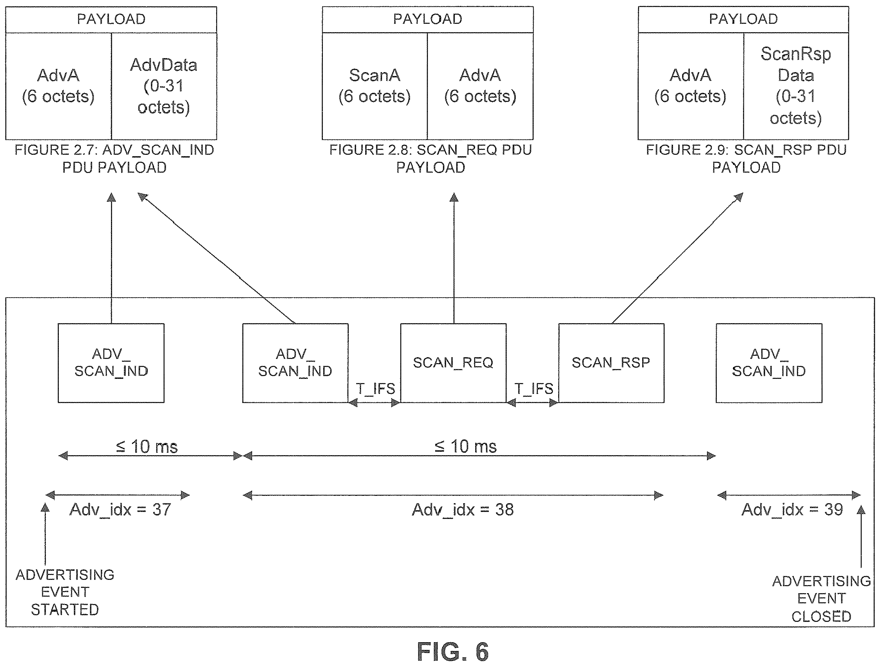

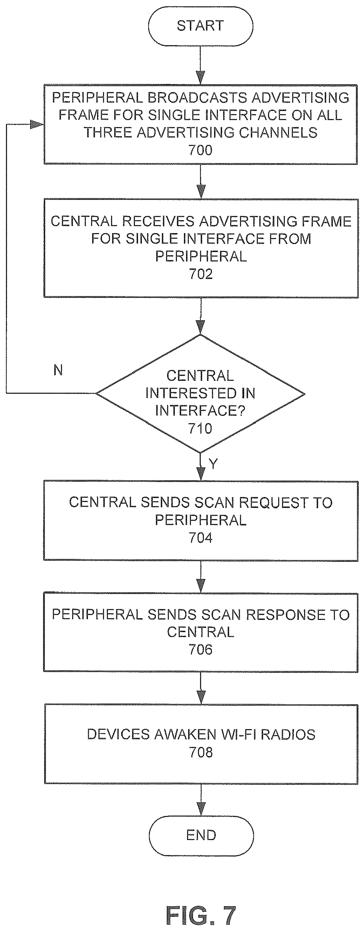

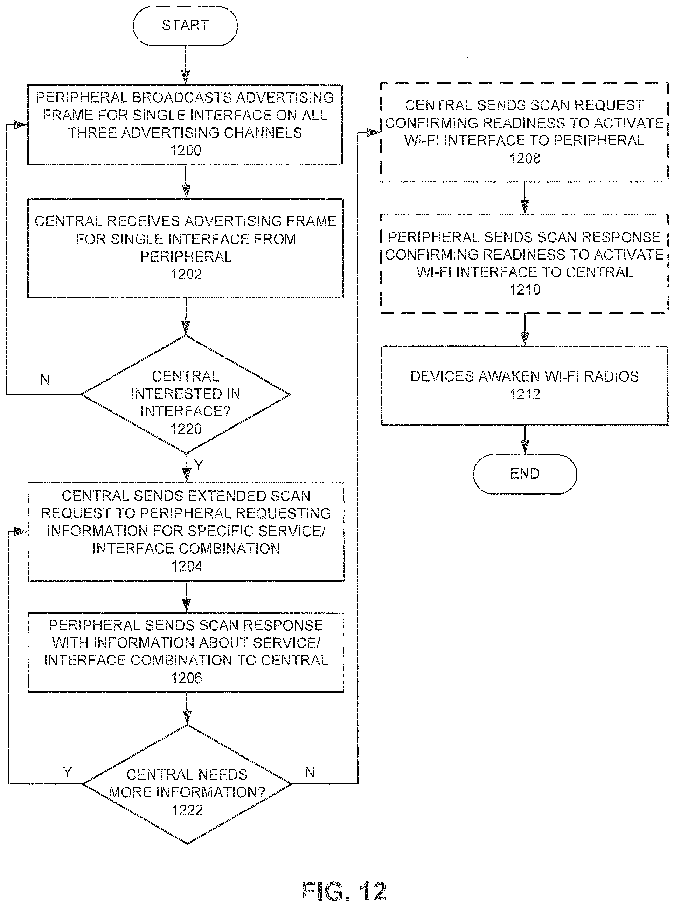

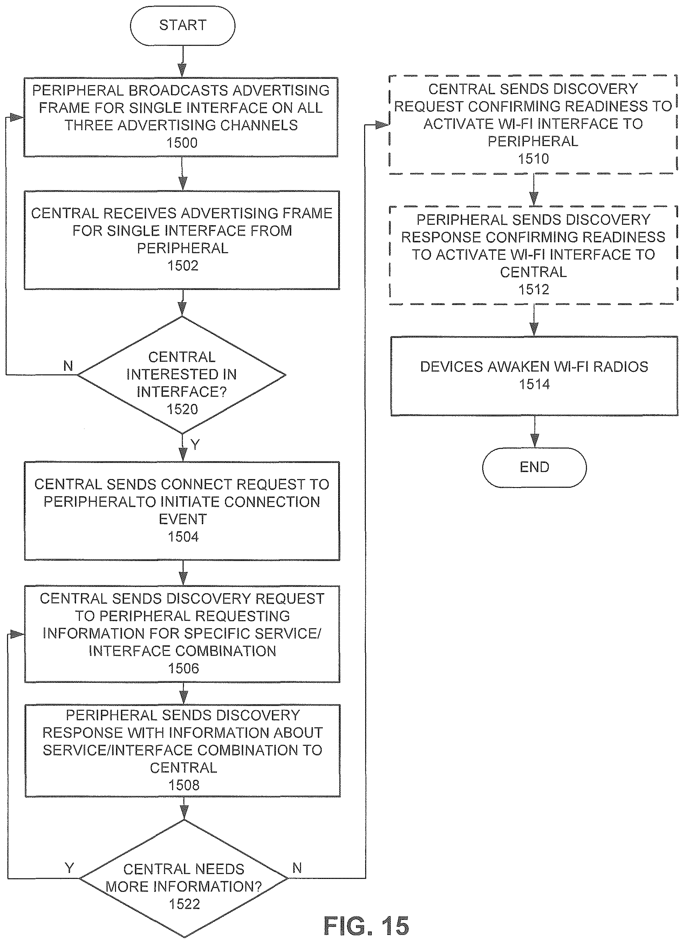

One issue with using BTLE link-layer communication to exchange service information and virtual network interface information relates to the size of frames used in BTLE link-layer communications. FIG. 6 discloses maximum payload sizes provided by advertising frames, scan request frames, and scan response frames. BTLE link-layer frames generally provide a maximum payload of 31 bytes. Furthermore, scan request frames only provide enough space for two address fields. In light of this issue, three different methods of efficiently transferring the service/interface data using BTLE link-layer frames are presented in detail below. First, FIGs. 7-11 provide a detailed illustration of using unmodified advertising frames, request frames, and response frames within a BTLE exchange to initialize a Wi-Fi connection. Next, FIGs. 12-14 provide a detailed illustration of using extended request frames within a BTLE exchange to initialize a Wi-Fi connection. Finally, FIGs. 15-17 provide a detailed illustration of using a BTLE connection event to initialize a Wi-Fi connection.

Returning now to the high-level example depicted in FIG.3, however, once the required service information and virtual network interface information is exchanged between devices 110 and 120, peripheral device 110 wakes up processor 140, turn on its Wi-Fi radio interface, and enable NAN interface 132, while central device 120 wakes up processor 142, turn on its Wi-Fi radio interface, and enable NAN interface 138 (operation 308). Devices 110 and 120 then begin their transition to new roles in the resulting Wi-Fi-based network. In some embodiments, the peripheral/slave device becomes the Wi-Fi network's master device, while the central/master device becomes a slave device. In other embodiments, the central/master device becomes the Wi-Fi network's master device, while the peripheral/slave device becomes the slave device in the Wi-Fi network.

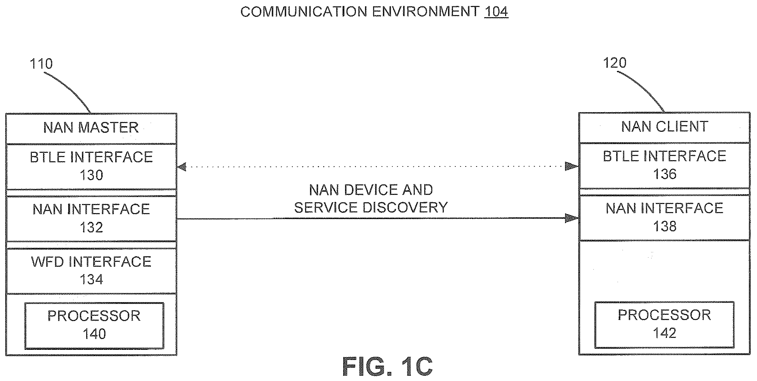

FIG. 1C illustrates the states of devices 110 and 120 after the devices have activated their Wi-Fi radios interfaces. When NAN interface 132 is enabled, peripheral device 110 automatically becomes the NAN master of the resulting NAN network and begins to transmit sync and discovery beacons on NAN social channels. Meanwhile, central device 120 begins scanning NAN social channels for a NAN network to join. Here, central device 120 more quickly detects and connects to the resulting NAN network due to information received during BTLE exchanges with peripheral device 110.

Finally, as illustrated in FIG. ID, central device 120 joins peripheral device 110's NAN network and takes advantage of the Wi-Fi connection's higher throughput while using peripheral device 110's service (operation 310). Incidentally, if central device 120 fails to discover peripheral device 110's NAN network, central device 120 may automatically start its own NAN network after a period of time. U.S. Patent Application No. 13/913,278, entitled "Method and Apparatus for Cooperative Channel Switching" and filed 17 June 2013, discloses systems and methods for detecting a NAN network, interacting with a NAN network, and negotiating with the NAN network to become the network's master, and is incorporated herein by reference.

In other embodiments where both the central device and the peripheral device possess WFD interfaces, the peripheral device creates a new WFD network as an autonomous Group Owner and begins periodically transmitting beacons. Here, by communicating with the peripheral device over the BTLE protocol, the central device already knows the new WFD network's operation channel. Thus, the central device begins scanning for the peripheral device's WFD network on that channel as a P2P device and quickly joins the WFD network.

The previous examples have illustrated peripheral devices broadcasting advertising frames to central devices. In some embodiments, however, the central device may broadcast advertising frames instead. More specifically, the central device may transmit frames that convey information regarding the central device's desired service/interface combination. In still other embodiments, two devices that wish to subscribe to each other's services may alternate between the peripheral and central role. In other words, both devices may alternate between periods of conducting advertising events and scanning periods and eventually subscribe to each other's services over one or more Wi-Fi connections. This may be useful in scenarios where both devices are non-peripheral devices (such as smartphones and computers) that wish to subscribe to each other's services.

### Low-Power Initialization with Unmodified Frames

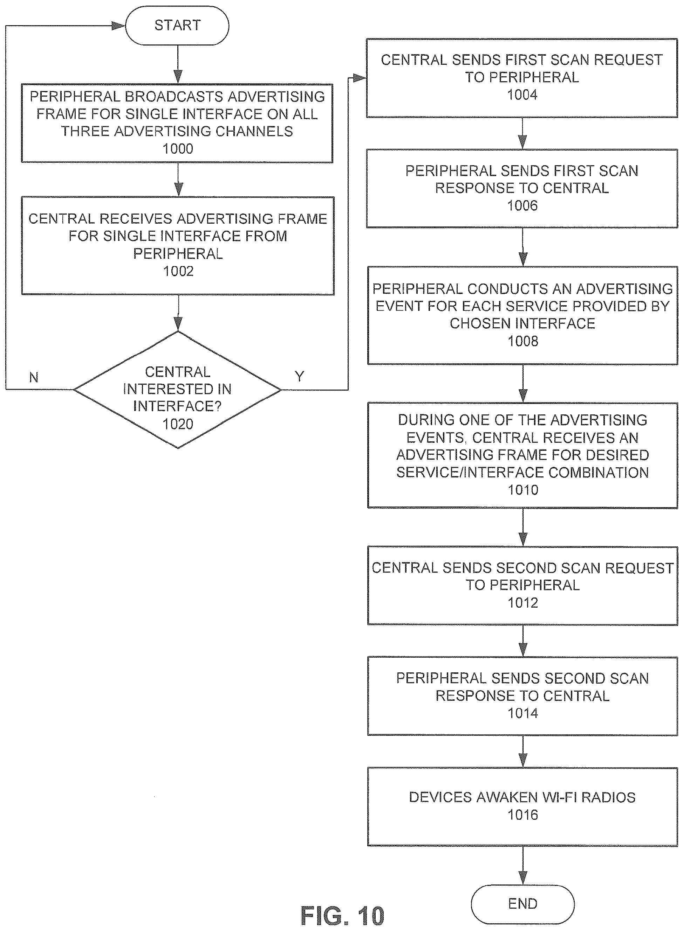

FIGs. 7-11 disclose examples of using unmodified advertising frames, request frames, and responses to communicate service and interface information between a central device and a peripheral device during low-power initialization of a high-power connection. FIGs. 7-9 illustrate a basic implementation of the above that uses a single-round scan request/scan response handshake, while FIGs. 10-11 illustrate a more advanced implementation that uses a two-round scan request/scan response handshake.

Using communication environment 102 of FIG. 1B as an example, peripheral device 110 and central device 120 have turned off their Wi-Fi radios and suspended their processors. For purposes of this example, peripheral device 110 may offer three different services: a first service with a first service ID, a second service with a second service ID, and a third service with a third service ID. Peripheral device 110 also possesses two virtual network interfaces: NAN interface 132 and WFD interface 134, wherein both virtual network interfaces provide all three services mentioned above. It should be noted that in some embodiments, a virtual network interface of a peripheral device may only provide a subset of all the services provided by the peripheral device.

Returning now to the above example, because peripheral device 110 possesses two virtual network interfaces that are each able to provide the three services, peripheral device 110 has six service/interface combinations to advertise within its advertising frames. Because advertising frames provide a maximum payload of 31 bytes, and because each service ID takes up six bytes, peripheral device 110 may not be able to advertise all service/interface combinations within a single advertising frame. Therefore, peripheral device 110 may have each advertising frame advertise the services provided by a single virtual network interface. Each subsequent advertising frame broadcast would focus on a different virtual network interface provided by the device until cycling back to the first virtual network interface. For example, peripheral device 110 possesses two virtual network interfaces: NAN interface 132 and WFD interface 134. Here, peripheral device 110 may issue a first advertising frame that advertises services provided through NAN interface 132, a second advertising frame that advertises services provided through WFD interface 134, and a third advertising frame that returns to advertising services provided through NAN interface 132. It should be noted that a peripheral device may advertise virtual network interfaces at different frequencies. For example, if peripheral device 110 determines that services provided through NAN interface 132 need to be advertised more often than services provided through WFD interface 134, peripheral device 110 may advertise NAN interface 132 four times for every time WFD interface 134 is advertised.

If a central device is interested in subscribing to peripheral device 110's services through WFD interface 134, the central device may be delayed in doing so by peripheral device 110's decision to advertise WFD interface 134 less often. To remedy this issue, peripheral device 110 may place within each advertising frame, an indication of when peripheral device 110 will conduct an advertising event that focuses on a different virtual network interface. Returning now to the above example, suppose peripheral device 110, which conducts advertising events every five seconds, just finished an advertising event that focused on WFD interface 134. The next advertising frame that peripheral device 110 broadcasts may indicate that, 20 seconds from now, peripheral device 110 will conduct an advertising event that focuses on WFD interface 134. When the central device that is interested in a WFD-provided service receives this advertising frame, the central device may suspend its Bluetooth radio for 20 seconds to conserve power.

Aside from the above indication, advertising frames also contain an indication of the currently advertised virtual network interface as well as a service ID list that describes services provided by the virtual network interface. In some embodiments, advertising frames may substitute the list of service IDs with a hash of service IDs that is created using Supported Service Type Hash (SSTH). In some other embodiments, advertising frames may substitute the list of service IDs with a bloom filter of the service IDs.

FIG. 7 provides a flowchart that explains how devices 110 and 120 may communicate over the course of several advertising events with unmodified frames using a single round scan request/scan response handshake. During a first advertising event, peripheral device 110 broadcasts advertising frames advertising WFD interface 134's service set on advertising channels 37, 38, and 39 (operation 700). Central device 120, which is scanning on one of these channels, receives one of the advertising frames (operation 702). Central device 120 then checks the advertising frame's virtual network interface indication, determining that the advertising frame is advertising services provided through a WFD interface. Because central device 120 only possesses NAN interface 138, central device 120 is not interested in the WFD interface and does not respond to the advertising frame (decision 710). Peripheral device 110, having received no responses, finishes the advertising event.

In a subsequent advertising event, peripheral device 110 advertises services provided through NAN interface 132 by broadcasting another set of advertising frames (operation 700). Central device 120 again receives one of the advertising frames on the channel it is scanning on (operation 702). This time, central device 120 finds that it is interested in the virtual network interface advertised by the advertising frame (decision 710). Central device 120 then transmits a scan request frame to peripheral device 110, which contains central device 120's MAC address as the source address and peripheral device 110's MAC address as the destination MAC address (operation 704). After receiving the scan request frame from central device 120, peripheral device 110 sends a scan response frame to central device 120. Here, the scan response frame may contain detailed information about NAN interface 132, including the interface's address, the interface's preferred NAN channel, and a time duration indicating when the NAN interface will be available after peripheral device 110's Wi-Fi radio is switched on (operation 706). Finally, devices 110 and 120 switch on their respective Wi-Fi radios and proceed to form a NAN network (operation 708).

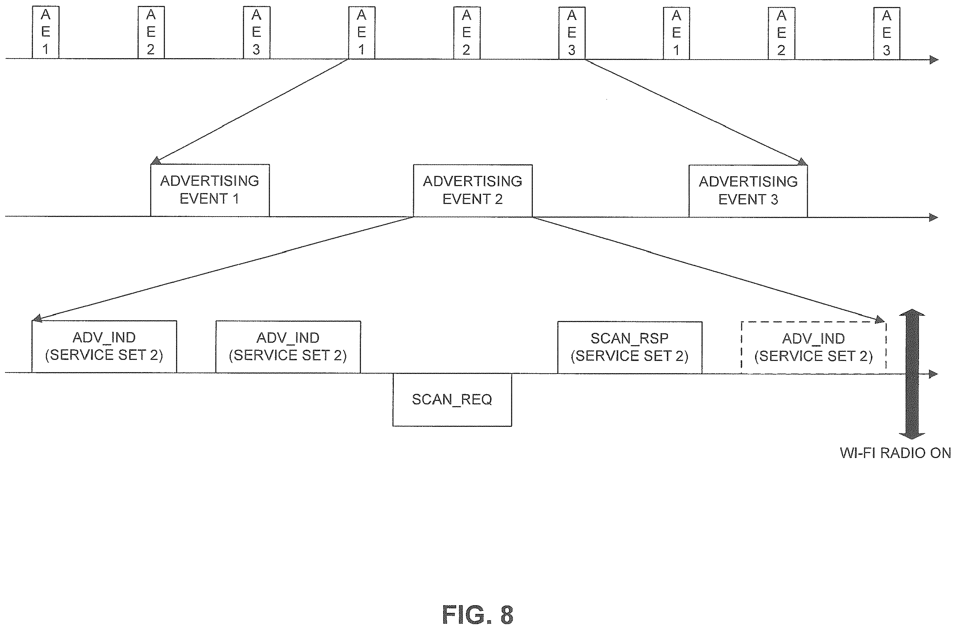

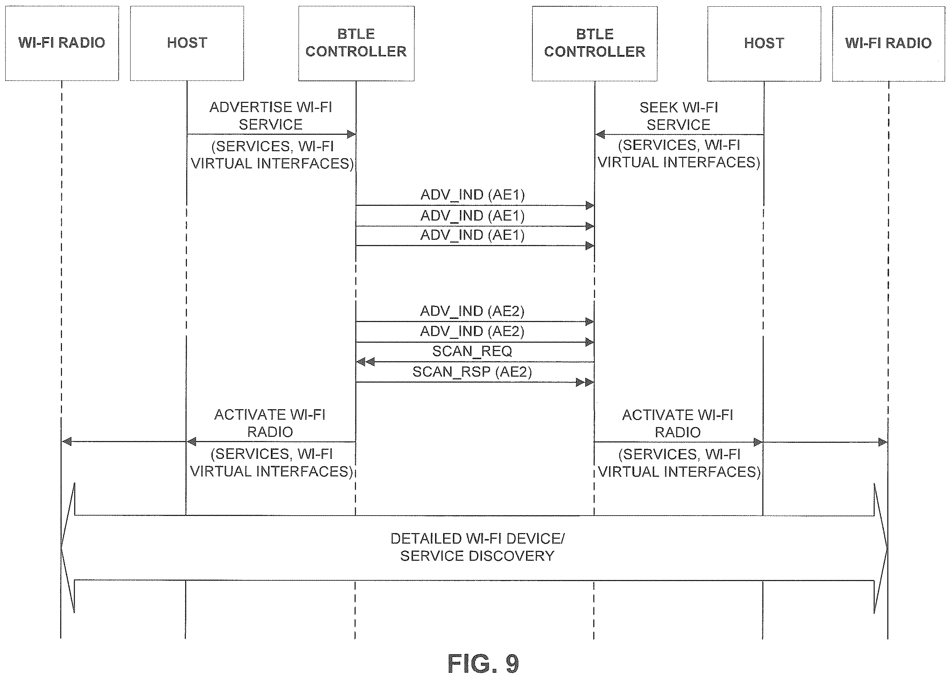

FIG. 8 provides an illustration of how a peripheral device may communicate with a central device with unmodified frames using a single-round scan request/scan response handshake. As shown in the middle row of FIG. 8, the peripheral device possesses three different virtual network interfaces and advertises a first interface during advertising event 1, a second interface during advertising event 2, and a third interface during advertising event 3. As shown in the top row of FIG. 8, the peripheral device rotates among advertising the three virtual network interfaces sequentially. As shown in the bottom row of FIG. 8, the peripheral device broadcasts three advertising frames during each advertising event. Additionally, a central device has responded to the second advertising frame broadcast during advertising event 2. The result of the communication between the peripheral device and the central device during advertising event 2 leads to both devices activating their Wi-Fi radios a short time after the end of advertising event 2 to form a Wi-Fi-based connection. FIG. 9 presents an event diagram that provides another perspective on the sequence of events described in FIG. 8.

One disadvantage with the single-round scan request/scan response handshake described in FIGs. 7-9 is that once a peripheral device has received a scan request frame from a central device that is ostensibly interested in one of its services, after sending a scan response frame that contains additional information about its services, the peripheral device may proceed to switch on its Wi-Fi radio without any confirmation from the central device. If the central device decides, based on the additional information received in the scan response, not to subscribe to the peripheral device's service, the central device has no way of inform its decision to the peripheral device. After switching on its Wi-Fi radio interface, the peripheral device waits in vain for the central device to connect its Wi-Fi network, wasting power in the process. One modification to the procedure described in FIGs. 7-9 involves a two-round scan request/scan response handshake that takes place over the course of two advertising events.

FIG. 10 provides a flowchart that explains how devices 110 and 120 may communicate over the course of several advertising events using unmodified frames and a two-round scan request/scan response handshake. During the first-round advertising event, peripheral device 110 advertises services provided through NAN interface 132 by broadcasting advertising frames across BTLE advertising channels 37, 38, and 39 (operation 1000). Central device 120 receives one of the advertising frames on the channel it is scanning (operation 1002). Central device 120 decides that it is interested in the virtual network interface advertised by the advertising frame (decision 1020). Here, central device 120 transmits a first scan request frame to peripheral device 110, which contains central device 120's MAC address as the source address and peripheral device 110's MAC address as the destination MAC address (operation 1004). After receiving the scan request frame from central device 120, peripheral device 110 sends a first scan response frame to central device 120, which (1) contains instructions telling central device 120 to scan for another advertising frame during a second-round advertising event and (2) indicates the starting time and duration of the second-round advertising event (operation 1006). The scan response frame may contain additional information about the currently advertised service set.

Once it is time for peripheral device 110 to advertise the same service for the second-round, peripheral device 110 may either (1) conduct a single advertising event as normal, wherein each broadcast advertising frame contains more detailed information about the current service set, or (2) conduct multiple "sub-events" spawned from the first-round event, wherein each sub-event advertises a single service of the service set advertised during the first-round event (operation 1008). Because peripheral device 110 is able to instruct central device 120 to listen for advertising frames at arbitrary times, peripheral device 110 has the option of conducting these sub-events closer together in time. During one of the sub-events, central device 120 receives an advertising frame that contains detailed information regarding the service/interface combination it is interested in (1010). Here, the second-round advertising frame may contain information that would normally be found in a scan response frame sent in FIG. 7, such as the interface's address, the interface's preferred NAN channel, and a time duration indicating when the interface will be available after peripheral device 110's Wi-Fi radio is switched on. Now, central device 120 is able to confirm to peripheral device 110 that it would like to subscribe to this service/interface combination by transmitting a second-round scan request frame to peripheral device 110 (operation 1012). In response, peripheral device 110 may confirm that both devices are ready to turn on their Wi-Fi radios by sending a second-round scan response frame to central device 120 (operation 1014). It should be noted that the second-round scan response frame may also contain detailed interface information that may assist central device 120 in finding the NAN network that peripheral device 110 plans to create. Finally, devices 110 and 120 switch on their respective Wi-Fi radios and proceed to form a NAN network (operation 1016). Because peripheral device 110 has the option of not switching on its Wi-Fi radio if it does not receive a second-round scan request frame from central device 120, the two-round scan request/scan response handshake may help peripheral device 110 conserve power.

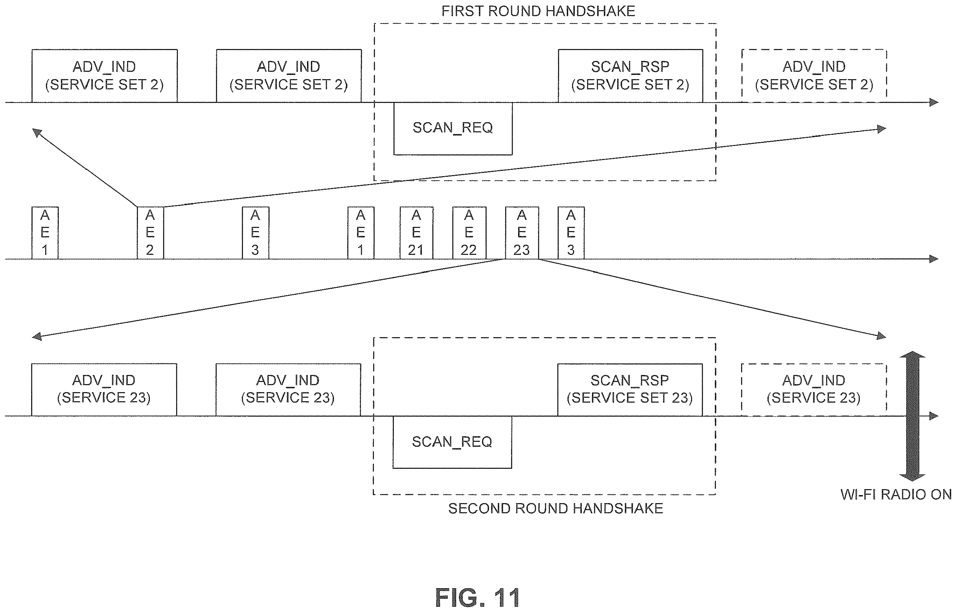

FIG. 11 provides a time-based illustration of how a peripheral device communicates with a central device with unmodified frames using a two-round scan request/scan response handshake. As shown in the middle row of FIG. 11, the peripheral device possesses three different virtual network interfaces and advertises a first interface during advertising event 1 (AE1), a second interface during advertising event 2 (AE2), and a third interface during advertising event 3 (AE3). As shown in the top row of FIG. 11, the peripheral device broadcasts three advertising frames during each advertising event 2 and a central device responds to the second advertising frame, leading to the first-round scan request/scan response exchange between the devices. Returning now to the middle row of FIG. 11, it is shown that the first-round exchange leads the peripheral device to spawn three sub-events within the time period during which the peripheral device would normally advertise its second interface's service set. Here, the first sub-event (AE21) advertises a combination of the second interface and a first service, the second sub-event (AE22) advertises a combination of the second interface and a second service, and the third sub-event (AE23) advertises a combination of the second interface and a third service. As shown in the bottom row of FIG. 11, because the central device is specifically interested in subscribing to the third service through the second interface, the central device responds to the third sub-event, leading to the second-round scan request/scan response exchange between the devices. Finally, the result of the second-round exchange leads to both devices activating their Wi-Fi radios shortly after the end of the third sub-event and forming a Wi-Fi-based connection.

### Low-Power Initialization with Extended Frames

FIGs. 12-14 illustrate the use of extended request frames to communicate service and interface information between a central device and a peripheral device during low-power initialization of a high-power connection.

Using communication environment 102 of FIG. 1B as an example, peripheral device 110 and central device 120 have turned off their Wi-Fi radios and suspended their processors. For purposes of this example, peripheral device 110 may offer three different services: a first service with a first service ID, a second service with a second service ID, and a third service with a third service ID. Peripheral device 110 also possesses two virtual network interfaces: NAN interface 132 and WFD interface 134, wherein both virtual network interfaces provide all three services mentioned above.

As mentioned above, the small payloads provided by BTLE link-layer frames impose a disadvantageous constraint on the speed of transferring service and interface information from a peripheral device to a central device. For example, a standard scan request frame possesses only enough payload space for two MAC addresses. When a peripheral device receives a scan request frame from a central device, the peripheral device can only deduce (1) the frame's source from the source MAC address stored in the frame, and (2) the frame's intended destination from the destination MAC address stored in the frame. In other words, a scan request frame is unable to convey to the peripheral device any information about what service/interface combination the central device is interested in.

In some embodiments, a central device may transmit "extended" scan request frames. The payload of an extended scan request frame is up to 25 bytes more than that of a standard scan request frame. As a result, a central device may transmit the following extra information via an extended scan request frame: (1) an indication of which service/interface combination the central device is interested in, and (2) a request for more detailed information for the combination such as the service's ID or name and the interface's type, capabilities, preferred channel, availability time, and other connection parameters of the Wi-Fi network that is to be created. In doing so, the central device is able to inform a peripheral device of the service/interface it is interested in a single frame transmission, thereby enabling the peripheral device to transmit a scan response frame with information specific to the identified service/interface combination. Extended frames enable a central device and a peripheral device to exchange service and interface information and confirm to each other that both devices are ready to switch on their Wi-Fi radios within a single advertising event.

FIG. 12 provides a flowchart that illustrates how devices 110 and 120 communicate over the course of a single advertising event using extended scan request frames. During an advertising event, peripheral device 110 broadcasts advertising frames advertising NAN interface 132's service set on advertising channels 37, 38, and 39 (operation 1200). Central device 120, which is scanning on one of these channels, receives one of the advertising frames (operation 1202) and is interested in one of the services of the service set advertised (decision 1220). Central device 120 then transmits an extended scan request frame to the peripheral device which contains (1) central device 120's MAC address as the source address, (2) peripheral device 110's MAC address as the destination MAC address, and (3) a request for more information regarding the second service provided by NAN interface 132, wherein the request contains the second service ID and NAN interface 132's interface index (operation 1204). Peripheral device 110 responds with a standard scan response frame, which contains detailed information about the second service provided by NAN interface 132, to central device 120 (operation 1206). If, after receiving the scan response frame, central device 120 still requires more information about the second service (decision 1222), central device 120 can send another extended scan request frame that contains a request for more information regarding the second service (operation 1204), leading peripheral device 110 to respond with yet another scan response frame (operation 1206). It should be noted that this scan request/scan response frame exchange and subsequent scan request/scan response frame exchanges may take place within the same advertising event or in a subsequent advertising event.

Assuming that the first scan response frame contained all the information needed by central device 120 to subscribe to the second service provided through NAN interface 132, central device 120 may transmit a final extended scan request frame to confirm that it is ready to switch on its Wi-Fi radio interface (optional operation 1208). Here, the final extended scan request frame may contain detailed information about NAN interface 138, such as the interface's availability time, MAC address, preferred channel, role, and other connection parameters of the Wi-Fi network that is to be created. In response, peripheral device 120 may transmit a final scan response frame to confirm that both devices are ready to switch on their Wi-Fi radio interfaces (optional operation 1210). Finally, devices 110 and 120 switch on their respective Wi-Fi radio interfaces and proceed to form a NAN network (operation 1212).

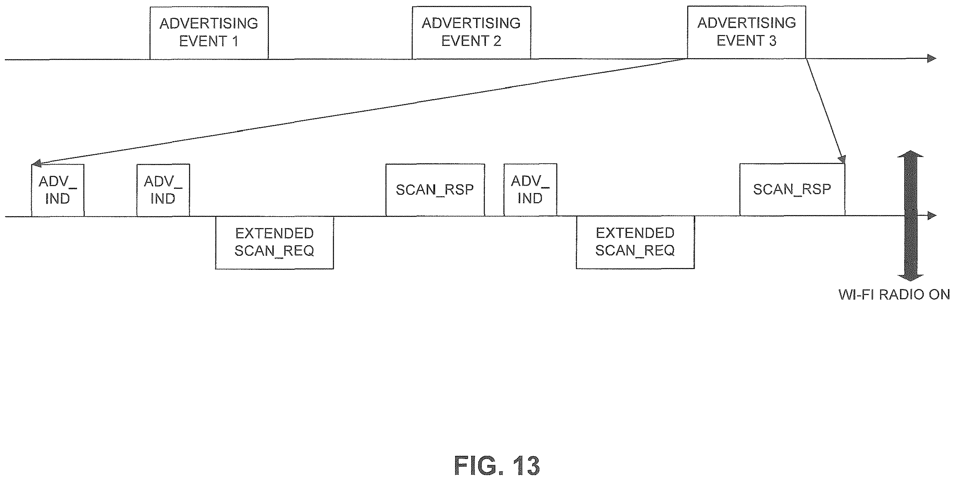

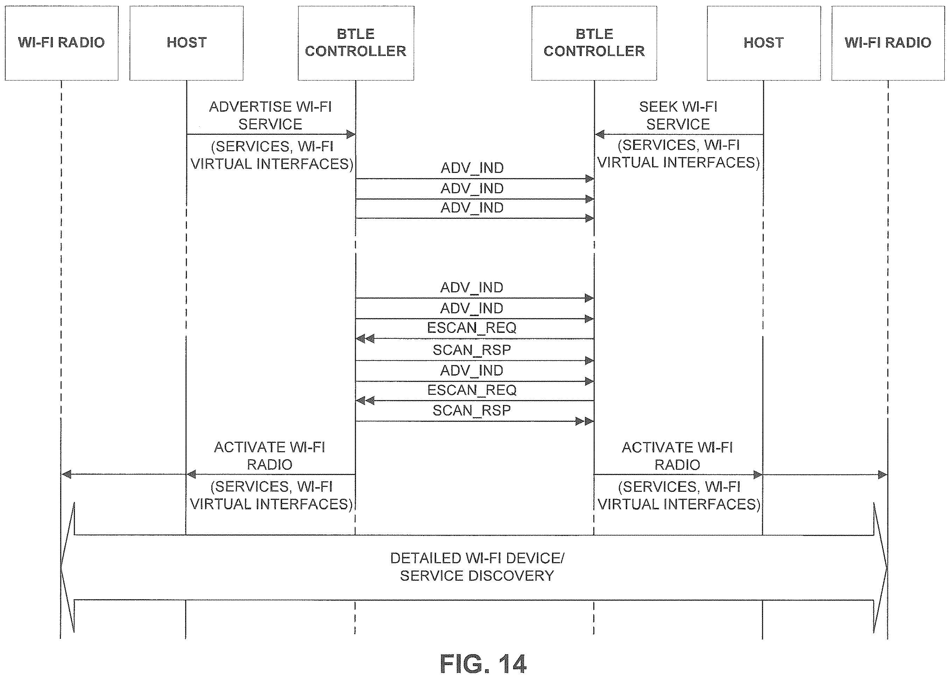

FIG. 13 provides a time-based illustration of how a peripheral device communicates with a central device using extended frames. As shown in the top row of FIG. 13, the peripheral device possesses three different virtual network interfaces and advertises a first interface during advertising event 1, a second interface during advertising event 2, and a third interface during advertising event 3. As shown in the bottom row of FIG. 13, the peripheral device broadcasts three advertising frames during each advertising event. Additionally, a central device has responded to the second advertising frame broadcast during advertising event 2, leading the two devices to exchange a first extended scan request frame and a first scan response. After waiting for the peripheral device to broadcast its last advertising frame for advertising event 2, the central device sends a final extended scan request frame to the peripheral device, leading the peripheral device to respond with a final scan response frame to confirm that both devices are ready to switch on their Wi-Fi radio interfaces. Finally, both devices activate their Wi-Fi radio interfaces a short time after the end of advertising event 2 to form a Wi-Fi-based connection. FIG. 14 presents an event diagram that provides another perspective on the sequence of events described in FIG. 13.

In embodiments where the central device is the one that broadcasts advertising frames, a peripheral device may transmit extended scan request frames while the central device may transmit extended scan response frames. Here, the central device (also known as the service seeker) may broadcast an advertising frame that contains an indication of the service/interface combination that the central device seeks. After receiving the advertising frame, the peripheral device (also known as the service provider) determines whether it can provide this combination. If so, the peripheral device may transmit an extended scan request frame, which contains detailed information about the service/interface combination provided by the peripheral device, to the central device. In response, the central device may transmit a first extended scan response, which carries an indication that it would like to activate its Wi-Fi radio interface, to the peripheral device. In some embodiments, the extended scan response may contain connection parameters pertaining to the central device's virtual network interface, which central device plans to enable to subscribe to the service, thereby enabling the peripheral device to quickly discover the central device's virtual network interface in the future.

Next, the peripheral device may respond with a second extended scan request to confirm the activation of its Wi-Fi radio interface and provide connection parameters pertaining to its virtual network interface. Finally, the central device may respond with a second extended scan response to acknowledge the receipt of the second extended scan request.

### Low-Power Initialization via Connection Event

FIGs. 15-17 illustrate the use of a connection event to communicate service and interface information between a central device and a peripheral device during low-power initialization of a high-power connection.

Using communication environment 102 of FIG. 1B as an example, peripheral device 110 and central device 120 have turned off their Wi-Fi radios and suspended their processors. For purposes of this example, peripheral device 110 may offer three different services: a first service with a first service ID, a second service with a second service ID, and a third service with a third service ID. Peripheral device 110 also possesses two virtual network interfaces: NAN interface 132 and WFD interface 134, wherein both virtual network interfaces provide all three services mentioned above.

In some embodiments, a central device may establish a BTLE connection with a peripheral device by sending a connect request frame to the peripheral device, thereby starting a connection event between the two devices. The advantages of using a connection event to transmit service and interface information are as follows. First, devices that have formed a BTLE connection may move their communication to one of the 37 channels available for data transfer, thereby avoiding channel congestion. Secondly, the devices may exchange BTLE data frames, which may provide larger payloads than frames associated with advertising events. Finally, the devices may exchange these frames more often. For example, the interval between data frame transmissions may be as low as 7.5ms.

Some embodiments also define new types of data frames, discovery request (DISC_REQ) frame and discovery response (DISC_RSP) frame. In general, data frames exchanged via a BTLE radio interface are generated and processed in the interface's host device. Here, discovery request frames and discovery response frames are generated and processed within the controller of the BTLE radio interface. In some embodiments, discovery request frames and discovery response frames are link layer control frames that are generated and processed specifically at the link layer, which belongs to the controller of the BTLE radio interface. By using these new data frames to exchange service and interface information after forming a BTLE connection, the peripheral device and the central device that formed the BTLE connection can avoid getting layers of the host group of the BTLE stack involved, thereby allowing their respective host processors to remain suspended. This allows both devices to conserve power.

FIG. 15 provides a flowchart that illustrates how devices 110 and 120 may communicate during an advertising event and a connection event. During an advertising event, peripheral device 110 broadcasts advertising frames advertising NAN interface 132's service set on the BTLE advertising channels (operation 1500). Central device 120, while scanning one of the advertising channels, receives one of the advertising frames (operation 1502) and is interested in one of the services of the service set advertised (decision 1520). Central device 120 then initiates a connection event by transmitting a connect request frame to the peripheral device (operation 1504). During the connection event, central device 120 sends a discovery request frame requesting more information regarding the second service provided by NAN interface 132, wherein the request contains the second service ID and NAN interface 132's interface index (operation 1506). Peripheral device 110 responds with a discovery response frame, which contains detailed information about the second service provided by NAN interface 132, to central device 120 (operation 1508). If, after receiving the discovery response frame, central device 120 still requires more information about the second service (decision 1522), central device 120 can send a another discovery request frame that contains a request for more information regarding the second service (operation 1506), leading peripheral device 110 to respond with yet another discovery response frame (operation 1508).

Assuming that the first discovery response frame contained all the information needed by central device 120 to subscribe to the second service provided through NAN interface 132, central device 120 may transmit a final discovery request frame to confirm that it is ready to switch on its Wi-Fi radio interface (optional operation 1510). Here, the final discovery request frame may contain detailed information about NAN interface 138, such as the interface's availability time, MAC address, preferred channel, role, and other connection parameters of the Wi-Fi network that is to be created. In response, peripheral device 120 may transmit a final discovery response frame to confirm that both devices are ready to switch on their Wi-Fi radio interfaces (optional operation 1512). Finally, devices 110 and 120 switch on their respective Wi-Fi radio interfaces and proceed to form a NAN network (operation 1514).

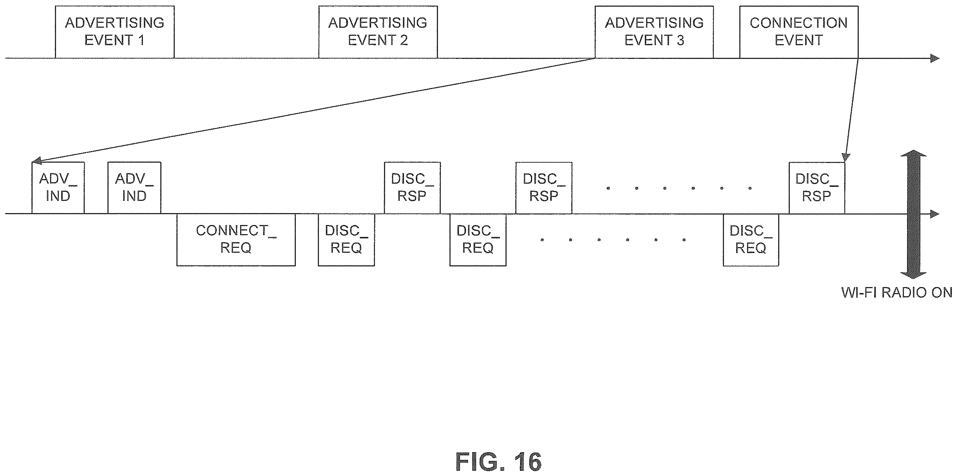

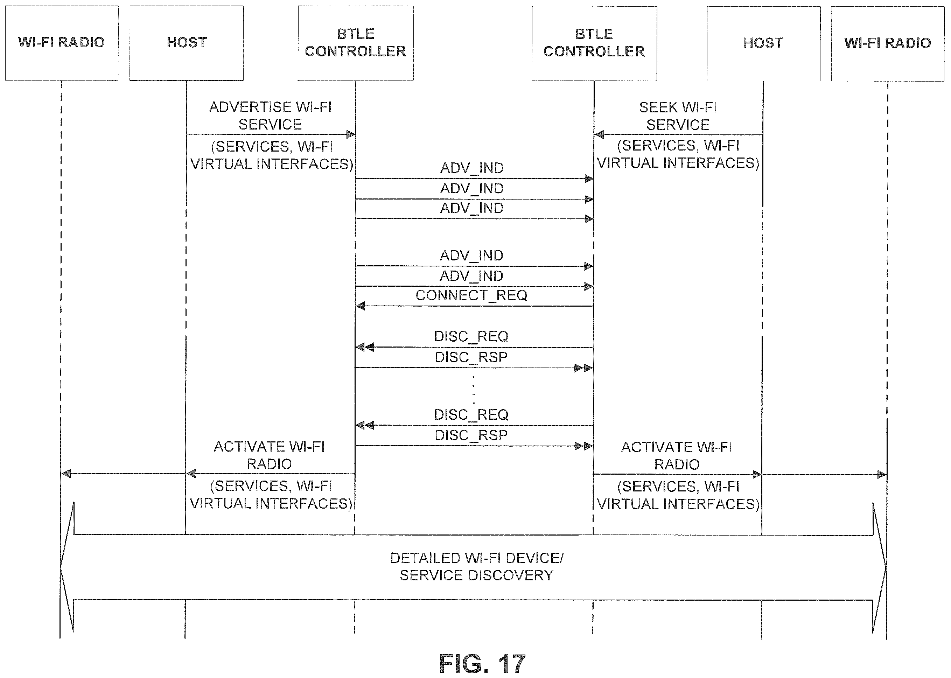

FIG. 16 provides a time-based illustration of how a peripheral device communicates with a central device during a connection event. As shown in the top row of FIG. 16, the peripheral device possesses three different virtual network interfaces and advertises a first interface during advertising event 1, a second interface during advertising event 2, and a third interface during advertising event 3. As shown in the bottom row of FIG. 16, the peripheral device broadcasts three advertising frames during each advertising event. Additionally, a central device responds to the second advertising frame broadcast during advertising event 2 by sending a connect request frame and initiating a connection event. The connection event, which is shown as the right-most event in the top row, begins without waiting for advertising event 2 to finish. As shown in the bottom row of FIG. 16, the two devices exchange a series of discovery request frames and discovery response frames. Finally, both devices activate their Wi-Fi radio interfaces a short time after the last discovery response frame to form a Wi-Fi-based connection. FIG. 17 presents an event diagram that provides another perspective on the sequence of events described in FIG. 16.

In embodiments where the central device is the one that broadcasts advertising frames, a peripheral device that receives an advertising frame may respond transmitting a connection request frame to the central device. After initiating a connection event, the peripheral device may send information to the central device by transmitting discovery request frames while the central device may send information to the peripheral device by transmitting discovery response frames.

The environment in which some embodiments are executed may incorporate a general-purpose computer or a special-purpose device, such as a hand-held computer, smart phone or other mobile device. Details of such devices (e.g., processor, memory, data storage, display) may be omitted for the sake of clarity.

The data structures and code described in this detailed description are typically stored on a computer-readable storage medium, which may be any device or medium that can store code and/or data for use by a computer system. The computer-readable storage medium includes, but is not limited to, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described below can be included in hardware modules. For example, the hardware modules may include, but are not limited to, application-specific integrated circuit (ASIC) chips, field-programmable gate arrays (FPGAs) and other programmable-logic devices now known or later developed. When the hardware modules are activated, the hardware modules perform the methods and processes included within the hardware modules.

The foregoing descriptions of embodiments have been presented for purposes of illustration and description only. They are not intended to be exhaustive or to limit the disclosure to the forms disclosed. Accordingly, many modifications and variations will be apparent to practitioners skilled in the art.

Additional numbered statements
1. A device capable of forming a network connection with a remote device, the device comprising:
   a processor;
   a memory;
   a low-power network interface;
   a high-power network interface; and
   wherein the low-power network interface is configured to:
      communicate with the remote device while the high-power network interface is in a dormant state;
      determine, based on the communication, whether to establish a network connection with the remote device via the high-power network interface; and
      if a network connection is to be established with the remote device via the high-power network interface, wake the high-power network interface and connect to the remote device via the high-power network interface.
2. The device of claim 1, wherein communicating with the remote device via the low-power network interface comprises:
   receiving a first service advertisement broadcast by the remote device; and
   sending a first request to the remote device regarding a first service disclosed in the first service advertisement;
   wherein the first service advertisement discloses one or more services provided by a first high-power network interface of the remote device, including the first service.
3. The device of claim 2, wherein a subsequent service advertisement discloses one or more services provided by a second high-power network interface of the remote device.
4. The device of claim 3, wherein the low-power network interface is further configured to:
   receive a first response from the remote device, the first response specifying a broadcast time of a modified service advertisement;
   receive the modified service advertisement from the remote device at the broadcast time, wherein the modified service advertisement discloses details of the first service provided by the first high-power network interface of the remote device;
   transmit a second request to the remote device to communicate a desire to connect to the remote device via the high-power network interface and the first high-power network interface of the remote device; and
   receive a second response from the remote device as confirmation of the desired connection.
5. The device of claim 2, wherein each service advertisement broadcast by the remote device discloses multiple services provided by multiple high-power network interfaces of the remote device, including the one or more services of the first high-power network interface of the remote device.
6. The device of claim 2, wherein the first request is extended to accommodate a disclosure of the device's interest in the first service, thereby causing the remote device to send a first response that further describes the first service after receiving the extended first request.
7. The device of claim 2, wherein:
   the first request is a connection request that establishes a connection with the remote device via the low-power network interface; and
   subsequent communications over the connection comprise one or more data frames exchanged between the device and the remote device, wherein:
      data frames sent from the device to the remote device comprise requests for information associated with services disclosed by the remote device; and
      data frames sent from the remote device to the device comprise the requested information.
8. The device of claim 1, wherein prior to communicating with the remote device, the low-power network interface is further configured to:
   copy configuration information associated with the high-power network interface into a component of the low-power network interface; and
   suspend the device's processor.
9. The device of claim 8, wherein prior to connecting to the remote device via the high-power network interface, the low-power network interface is further configured to:
   send the configuration information to the remote device, thereby enabling the device and the remote device to connect via the first high-power network interface after the first high-power network interface and the device's processor are awakened, without sending the configuration information via the first high-power network interface; and
   wake the device's processor.
10. The device of claim 1, wherein the high-power network interface is one of the following:
   a Neighbor Awareness Networking (NAN) interface;
   a Wi-Fi Direct (WFD) interface; and
   an infrastructure-based wireless local area network (WLAN) interface.
11. The device of claim 1, wherein the low-power network interface is a Bluetooth low energy (BTLE) interface.
12. A computer-implemented method for initiating a network connection between a first device and a second device, the method comprising:
   while one or more high-power network interfaces of the first device are in a dormant state, communicating with the second device via a low-power network interface of the first device;
   determining, based on the communication, whether to establish a network connection with the second device via a high-power network interface of the first device; and
   if a network connection is to be established with the second device via the high-power network interface, waking a first high-power network interface of the first device and connecting to the second device via the first high-power network interface of the first device.
13. The computer-implemented method of claim 12, wherein communicating with the second device via the low-power network interface comprises:
   receiving a first service advertisement broadcast by the second device; and
   sending a first request to the second device regarding a first service disclosed in the first service advertisement;
   wherein the first service advertisement discloses one or more services provided by a first high-power network interface of the second device, including the first service.
14. The computer-implemented method of claim 13, wherein a subsequent service advertisement discloses one or more services provided by a second high-power network interface of the second device.
15. A non-transitory computer-readable medium storing instructions that, when executed by a computer, cause the computer to perform a method for initiating a network connection between a first device and a second device, the method comprising:
   while one or more high-power network interfaces of the first device are in a dormant state, communicating with the second device via a low-power network interface of the first device;
   determining, based on the communication, whether to establish a network connection with the second device via a high-power network interface of the first device; and
   if a network connection is to be established with the second device via the high-power network interface, waking a first high-power network interface of the first device and connecting to the second device via the first high-power network interface of the first device.

## Claims

1. A device capable of forming a network connection with a remote device, the device comprising:
a processor;
a memory;
a low-power network interface;
a controller associated with the low-power interface;
wherein, while the processor is suspended, the controller is configured to:
perform a scan of a channel for the remote device;
receive, during the scan of the channel, a communication from the remote device;
responsive to receiving the communication, determine whether to establish a network connection with the remote device via the low-power network interface; and
in response to determining the network connection is to be established with the remote device via the low-power network interface, utilize a protocol layer that resides within the low-power network interface to establish the network connection with the remote device,
wherein the low-power network interface is a Bluetooth low energy (BTLE) interface.

2. The device of claim 1, wherein the channel is a BTLE advertising channel and the communication includes an advertising frame and the network connection is a BTLE data connection.

3. The device of claim 1, wherein, in utilizing the protocol to establish the network connection, the controller is further configured to:
transmit over the channel a connection request frame to the remote device.

4. The device of claim 1, the controller is further configured to:
transmit communications over the network connection;
determine, based on the communications, that the device and the remote device are entering a service discovery phase; and
in response to determining that the device and the remote device are entering the service discovery phase, wake the processor.

5. The device of claim 4, further comprising:
a high-power network interface, wherein the scan of the channel is performed by the controller while the high-power network interface is in a dormant state and wherein the controller is further configured to:
determine, responsive to receiving the communication, whether to establish another network connection with the remote device via the high-power network interface;
in response to determining the another network connection is to be established with the remote device via the high-power network interface, wake the high-power network interface and connect to the remote device via the high-power network interface,
wherein the high-power network interface is one of the following: a Wi-Fi Direct (WFD) interface or an infrastructure-based wireless local area network (WLAN) interface.

6. The device of claim 5, wherein in the service discovery phase, the controller is further configured to:
receive a first service advertisement broadcast by the remote device; and
send a first request to the remote device regarding a first service disclosed in the first service advertisement,
wherein the first service advertisement discloses one or more services provided by a first high-power network interface of the remote device, including the first service.

7. The device of claim 6, wherein a subsequent service advertisement discloses one or more services provided by a second high-power network interface of the remote device.

8. The device of claim 7, wherein the controller is further configured to:
receive a first response from the remote device, the first response specifying a broadcast time of a modified service advertisement;
receive the modified service advertisement from the remote device at the broadcast time, wherein the modified service advertisement discloses details of the first service provided by the first high-power network interface of the remote device;
transmit a second request to the remote device to communicate a desire to connect to the remote device via the high-power network interface and the first high-power network interface of the remote device; and
receive a second response from the remote device as confirmation of the desired connection.

9. The device of claim 6, wherein the first request is extended to accommodate a disclosure of interest in the first service, thereby causing the remote device to send a first response that further describes the first service after receiving the first request.

10. The device of claim 6, wherein subsequent communications over the connection comprise one or more data frames exchanged between the device and the remote device, wherein:
data frames sent from the device to the remote device comprise requests for information associated with services disclosed by the remote device; and
data frames sent from the remote device to the device comprise the requested information.

11. The device of claim 6, wherein prior to connecting to the remote device via the high-power network interface, the controller is further configured to:
copy configuration information associated with the high-power network interface into a component of the low-power network interface;
send the configuration information to the remote device, thereby enabling the device and the remote device to connect via the first high-power network interface after the first high-power network interface and the processor are awakened, without sending the configuration information via the first high-power network interface; and
wake the processor.

12. A computer-implemented method for initiating a network connection between a first device and a second device, the method comprising:
while a processor of the first device is suspended, communicating with the second device via a controller of a low-power network interface of the first device, the communicating comprising:
performing a scan of a channel for the second device;
receiving, during the scan of the channel, a communication from the second device;
responsive to receiving the communication, determining whether to establish a network connection with the second device via the low-power network interface; and
in response to determining the network connection is to be established with the second device via the low-power network interface, utilizing a protocol layer that resides within the low-power network interface to establish the network connection with the second device; and
receiving, by the low-power network interface of the first device, a first service advertisement comprising a service list describing one or more services provided by a first high-power network interface of the second device.

13. The computer-implemented method of claim 12, wherein the communicating further comprises:
identifying a service from the service list;
transmitting, to the remote device, a request for information corresponding to the identified service from the service list; and
receiving, from the remote device and in response to the request, a response including the information associated with the identified service from the service list.

14. The computer-implemented method of claim 12, wherein the communicating further comprises:
determining, based at least in part on the response, whether to establish another network connection with the second device via a high-power network interface of the first device; and
in response to determining the another network connection is to be established with the second device via the high-power network interface, waking the high-power network interface and connecting to the second device via the high-power network interface.

15. The computer-implemented method of claim 12, wherein communicating with the second device via the controller comprises:
receiving a first service advertisement broadcast by the second device; and
sending a first request to the second device regarding a first service disclosed in the first service advertisement,
wherein the first service advertisement discloses one or more services provided by the first high-power network interface of the second device, including the first service.
